Europäisches Patentamt

European Patent Office

Office européen des brevets

(11) Veröffentlichungsnummer: **0 083 333**
**A1**

(12) **EUROPÄISCHE PATENTANMELDUNG**

(21) Anmeldenummer: 82890146.2

(22) Anmeldetag: 11.10.82

(51) Int. Cl.³: **G 05 D 16/16**
**F 15 B 21/00**

(30) Priorität: 16.12.81 AT 5385/81

(43) Veröffentlichungstag der Anmeldung:
06.07.83 Patentblatt 83/27

(84) Benannte Vertragsstaaten:
CH DE FR GB LI SE

(71) Anmelder: VOEST-ALPINE Aktiengesellschaft
Friedrichstrasse 4
A-1011 Wien(AT)

(72) Erfinder: Strahsner, Emanuel
Goldregenstrasse 7
A-8720 Knittelfeld, Neuhautzenbiehl(AT)

(74) Vertreter: Kretschmer, Adolf, Dipl.-Ing. et al,
Patentanwälte Dipl.Ing. A. Kretschmer Dr. Thomas M.
Haffner Schottengasse 3a
A-1014 Wien(AT)

(54) Einrichtung zum Regeln des Druckes in einer Fluidikleitung.

(57) Eine Einrichtung zum Regeln des Druckes in einer Fluidikleitung (1) weist ein in dieser Leitung liegendes Regelventil (9) auf, dessen Betätigungsorgan (15) durch eine Feder (24) in die Schließstellung bewegbar ist und durch Anlegen des in Strömungsrichtung vor dem Regelventil (9) herrschenden Fluidikleitungsdruckes in die Offenstellung bewegbar ist. Zu diesem Zweck ist das Betätigungsorgan (15) des Regelventils (9) über eine vor dem Regelventil an die Fluidikleitung (1) angeschlossene Abzweigleitung (11) und ein Steuerventil (12) mit Druck beaufschlagbar, dessen Betätigungsorgan (19) durch eine Feder (25) in die Offenstellung bewegbar ist und durch den in Strömungsrichtung nach dem Regelventil (9) herrschenden Fluidikleitungsdruck in die Schließstellung bewegbar ist.

Croydon Printing Company Ltd

Einrichtung zum Regeln des Druckes in einer Fluidikleitung

Die Erfindung bezieht sich auf eine Einrichtung zum Regeln des Druckes in einer Fluidikleitung , insbesondere zur Regelung von niederen Flüssigkeitsdrücken bis max. 5 bar. Die Regelung von niederen Drücken in Systemen, welche großen Druckschwankungen unterworfen sind, stellt insbesondere im Grubenbetrieb ein bedeutendes Problem dar. Beispielsweise muß für Entstaubungsanlagen eine konstante Wassermenge mit möglichst gleichbleibendem Druck versprüht werden, um den erwünschten Effekt zu gewährleisten. Die Wasseranspeisung eines Grubennetzes kann aber sowohl Druck- als auch Volums-änderungen unterliegen und die Erfindung zielt daher darauf ab, sowohl eine mengenmäßige als auch eine Druckregelung für derartige niedere Verbraucherdrücke sicherzustellen. Der Düsendruck bei Entstaubern kann beispielsweise 1,5 bar betragen, wobei eine konstante Wassermenge von beispielsweise 10 bis 15 1/min sichergestellt sein soll. Dieser Zustand soll auch bei häufigem Zu- und Abschalten derartiger Verbraucher rasch und sicher wieder eingestellt werden.

Zur Verbesserung der Regelung des Druckes unter gleichzei - tiger Gewährleistung einer Mengenregelung wird die eingangs genannte Einrichtung erfindungsgemäß dadurch weitergebildet, daß in die Fluidikleitung ein Regelventil eingeschaltet ist, dessen Betätigungsorgan vom Fluidikleitungsdruck vor dem Regelventil über eine Zweigleitung im Sinne des Öffnens des Regelventils beaufschlagbar ist, und daß wenigstens ein Steuerventil in die Zweigleitung zum Betätigungsorgan des Regelventils eingeschaltet ist, dessen Betätigungsorgan vom Druck in der Fluidikleitung nach dem Regelventil im Schließsinne beaufschlagt ist. Dadurch, daß der Druck in der Fluidikleitung vor dem Regelventil für die Verstellung des Regelventils und der Druck in der Fluidikleitung nach dem Regelventil für die Verstellung eines Steuerventils in der Leitung zum Betätigungsorgan des Regelventils herangezogen wird, läßt sich eine besonders einfache und zuverlässige Regelung der Menge des Fluidikmediums sowie seines Druckes erzielen.

Erfindungsgemäß ist vorzugsweise in die Fluidikleitung zwischen Regelventil und Verbraucher eine Drossel eingeschaltet und an die Fluidikleitung zwischen dem Regelventil und der Drossel eine Zweigleitung angeschlossen, welche mit dem Betätigungsorgan des Steuerventils in der Zweigleitung zum Betätigungsorgan des Regelventils verbunden ist, wodurch die Regelung auf konstante Menge verbessert wird.

Zur Vergleichmäßigung des Regelvorganges und zur Erzielung stationärer Zustände im Regelkreislauf ist es besonders vorteilhaft, wenn die Ausbildung so getroffen ist, daß die Zweigleitung für das Betätigungsorgan des Regelventils nach dem Betätigungsorgan des Regelventils über ein weiteres Steuerventil mit dem Rücklauf bzw. Tank verbunden ist, dessen Betätigungsorgan vom Druck in der Fluidikleitung nach der Drossel im Öffnungssinne beaufschlagt ist, wobei vorzugsweise das Betätigungsorgan des weiteren Steuerventils in der Zweigleitung einen Leerweg aufweist, über welchen es vom Druck in der Fluidikleitung nach der Drossel bewegbar ist, und daß das Öffnen des weiteren Steuerventils erst anschließend an den Leerweg des Betätigunsorganes einsetzt. Auf diese Weise wird erreicht, daß in Betriebszuständen, in welchen das Versorgungsnetz keinen Schwankungen unterworfen ist, ein stationärer Zustand im Regelkreis sichergestellt werden kann.

In einfacher Weise können die Betätigungsorgane der Ventile von federbelasteten Kolben gebildet sein, deren Arbeitsräume vom Druck in den angeschlossenen Leitungen beaufschlagt sind. Die Anordnung ist hiebei so getroffen, daß der Betätigungskolben des Regelventils durch eine Feder im Schließsinne des Regelventils beaufschlagt ist, daß der Betätigungskolben des Steuerventils in der Zweigleitung zum Arbeitsraum des Betätigungskolbens des Regelventils durch eine Feder im Öffnungssinne des Steuerventils beaufschlagt ist, daß der Betätigungskolben des weiteren Steuerventils zum Rücklauf oder Tank durch eine Feder im Schließsinne des weiteren Steuerventils beaufschlagt ist und daß der Betätigungskolben erst nach einem ersten Teilbereich seines Hubes im Öffnungssinne des weiteren Steuerventils mit dem weiteren Steuerventil zusammenwirkt. Durch diese Maßnahme wird sichergestellt, daß bei konstantem Druck des Versorgungsnetzes der auf den Betätigungskolben des Regelventils wirksam werdende Druck vom Druck zwischen den beiden geschlossenen Steuerventilen bestimmt ist und Instabilitäten der Regelung vermieden werden. Es wird somit der Drosselzustand des Regelventils stabil gehalten, solange der Druck in der Fluidikleitung keine Veränderung erfährt.

Um eine weiche Regelung zu gewährleisten, sind vorzugsweise die Steuerventile mit einem Anschlag ausgestattet, welcher vor Erreichen der vollen Offenstellung der Steuerventile mit den Betätigungsorganen derselben zusammenwirkt.

Da das Versorgungsnetz üblicherweise einen höheren Druck aufweist als der vom Verbraucher benötigte Druck, ist vorzugsweise in die Fluidikleitung vor dem Regelventil und vor der Abzweigung der Zweigleitung für das Betätigungsorgan des Regelventils eine einstellbare Drossel eingeschaltet. Auf diese Weise wird sichergestellt, daß ein Mindestdruck in der zu regelnden Fluidikleitung immer zur Verfügung steht, so daß die Regelung stabile Zustände erreichen kann.

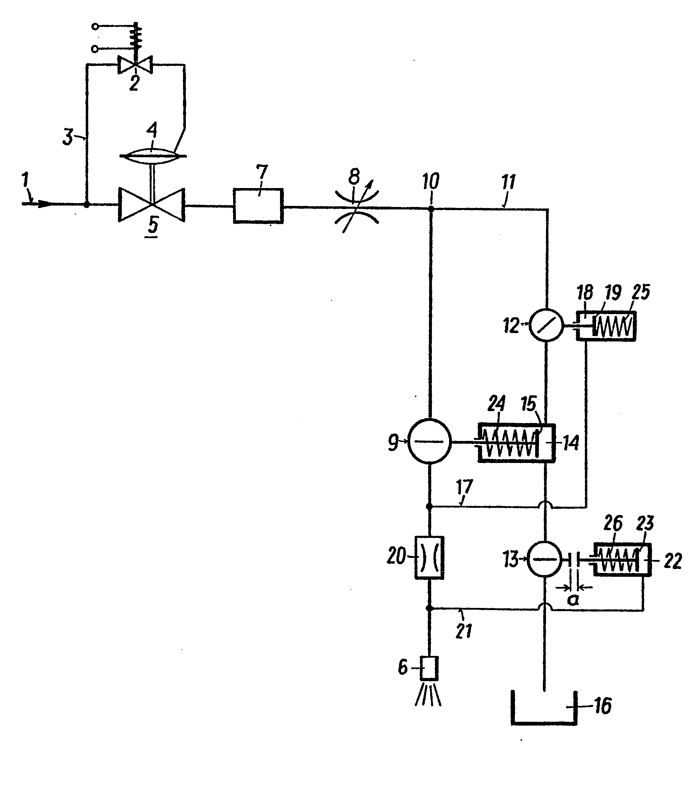

Die Erfindung wird nachfolgend anhand eines in der Zeichnung dargestellten Ausführungsbeispieles näher erläutert.

An eine Fluidikleitung 1 ist eine nicht dargestellte Druckmittelversorgung angeschlossen und es ist ein Magnetventil 2 für die Zu- und Abschaltung der Druckmittelzufuhr vorgesehen.

- 4 -

Das Magnetventil 2 öffnet bzw. schließt eine Zweigleitung 3 zu einem Betätigungsorgan 4 des Haupthahnes 5, wodurch die Druckmittelzufuhr zu dem als Düse 6 dargestellten Verbraucher freigegeben oder abgeschlossen wird. Nach dem Haupthahn 5 ist ein Filter 7 und eine einstellbare Drossel 8 in die Fluidikleitung 1 eingeschaltet. Nach der Drossel 8 und vor dem Regelventil 9 zweigt bei 10 eine Zweigleitung 11 ab, in welcher ein oberes Steuerventil 12 und ein unteres Steuerventil 13 vorgesehen sind. Die Zweigleitung 11 ist an den Arbeitsraum 14 des Betätigungskolbens 15 für das Regelventil 9 angeschlossen und mündet nach dem unteren Steuerventil 13 in den Rücklauf bzw. Tank 16.

Nach dem Regelventil 9 zweigt von der Fluidikleitung 1 eine weitere Zweigleitung 17 zum Arbeitsraum 18 des Betätigungskolbens 19 des Steuerventils 12 ab. Es ist weiters eine Drossel 20 in der Fluidikleitung 1 vorgesehen und zwischen der Drossel 20 und dem Verbraucher 6 zweigt eine weitere Leitung 21 von der Fluidikleitung 1 ab, welche mit dem Arbeitsraum 22 des Betätigungskolbens 23 des unteren Steuerventils 13 verbunden ist.

Der Betätigungskolben 15 des Regelventils 9 ist durch eine Feder 24 im Schließsinne des Regelventils 9 beaufschlagt.

Der Betätigungskolben 19 des Steuerventils 12 ist durch eine Feder 25 im Öffnungssinne des Steuerventils 12 beaufschlagt. Der Betätigungskolben 23 des Steuerventils 13 ist durch eine Feder 26 im Schließsinne beaufschlagt, wobei ein Leerhub a vorgesehen ist, über welchen der Kolben 23 im Öffnungssinne des Steuerventils 13 bewegt werden kann, ohne daß ein Öffnen des Steuerventils 13 bewirkt wird.

Die Funktion der beschriebenen Einrichtung soll im folgenden anhand der verschiedenen Betriebszustände näher erläutert werden.

Vor Einschalten des Verbrauchers 6 ist der Haupthahn 5 geschlossen. Unter der Wirkung der Feder 24 bleibt auch das Regelventil 9 geschlossen. Das Steuerventil 12 bleibt unter der Wirkung der Feder 25 in geöffnetem Zustand. Schließlich ist das zweite Steuerventil 13 vor Einschalten des Verbrauchers auf Grund der Wirkung der Feder 26 in geschlossenem Zustand.

Beim Einschalten des Verbrauchers wird der Haupthahn 5 geöffnet und bleibt über die gesamte Betriebszeit in seiner Offenstellung. Da das Steuerventil 12 durch die Feder 25 in der Offenstellung gehalten wurde, fließt das Druckmittel, im besonderen Wasser, sowohl zum Regelventil 9 als auch über das Steuerventil 12 zum Arbeitsraum des Betätigungskolbens 15 für das Regelventil 9. Der sich aufbauende Druck führt zum Öffnen des Regelventils 9, so daß die Drossel 20 und der Verbraucher bzw. die Düse 6 mit Wasser beaufschlagt werden. Bedingt durch die Drossel und das Regelventil treten im Verlauf der Fluidikleitung 1 Druckdifferenzen auf, welche für die Steuerung herangezogen werden. Die steigende Druckdifferenz an der Drossel 20 führt zum Aufbau eines Druckes in der Leitung 17 und damit zu einer Verstellung des Steuerventils 12 im Schließsinne. Das Steuerventil 12 schließt, sobald der Nenndruck für die Sprühdüse 6 erreicht wird. Zwischen den Steuerventilen 12 und 13, welche nunmehr beide geschlossen sind, steht nun eine Wassersäule unter einem bestimmten Druck, welcher auf den Betätigungskolben 15 des Regelventils 9 im Gleichgewicht mit der Kraft der Feder 24 einwirkt. Die Drosselstellung des Regelventils 9 wird somit auf dem für den Nennbetrieb der Sprühdüse erforderlichen Wert konstant gehalten.

Wenn nun der Betriebsdruck gegenüber diesem Normalzustand ansteigt, wird auch eine steigende Wassermenge in das Regelsystem geliefert. Damit steigt auch entsprechend der Druck--Volumencharakteristik der Drossel 20 und der Sprühdüse 6 der

auftretende Differenzdruck. Während das Steuerventil 12 geschlossen bleibt, wird der Betätigungskolben 23 des Steuerventils 13 in Öffnungsrichtung des Steuerventils 13 bewegt, sobald der Druck in der Leitung 21 über den Nenndruck der Düse 6 ansteigt. Sobald das Steuerventil 13 öffnet, kann Wasser aus der Zweigleitung 11 zwischen den Steuerventilen 12 und 13 austreten, so daß ein Druckabfall in diesem Leitungsabschnitt eintritt und der Betätigungskolben 15 des Regelventils 9 unter der Kraft der Feder 24 im Schließsinne bewegt wird. Der Drosselquerschnitt des Regelventils 9 wird verkleinert und der Druckabfall am Regelventil 9 erhöht, so daß sich die durchfließende Wassermenge und der Leitungsdruck hinter dem Regelventil 9 so weit verringern, bis der Nenndruck und das Nennvolumen an der Sprühdüse wiederum erreicht werden. In diesem Fall wird das Steuerventil 13 unter der Einwirkung der Kraft der Feder 26 auf den Betätigungskolben 23 wieder geschlossen und die zwischen den Steuerventilen 12 und 13 stehende Wassersäule steht nunmehr unter verringertem Druck wieder in Ruhe. Der neue Regelzustand des Regelventils 9 bleibt auf diese Weise stabil, solange der Leitungsdruck in der Fluidikleitung 1 keine Veränderungen erfährt.

Wenn nun der Betriebsdruck in der Fluidikleitung 1 fällt, so bewirkt dies, daß nach dem Regelventil 9 entsprechend der Charakteristik der Drossel 20 und der Sprühdüse 6 sowohl der Druck als auch das Volumen unter die Nennwerte des Normalbetriebes sinken. In diesem Falle bleibt das Steuerventil 13 geschlossen. Auf Grund der sinkenden Druckdifferenz öffnet das Steuerventil 12 unter der Einwirkung der Kraft der Feder 25, so daß ein höherer Druck im Arbeitsraum 14 des Betätigungskolbens 15 des Regelventils 9 aufgebaut wird. Diese Druckerhöhung bewirkt ein Öffnen des Drosselquerschnittes des Regelventils 9, so daß hinter dem Regelventil 9 in der Fluidikleitung 1 wiederum ein Druck- und Volumsanstieg so lange auftritt, bis das Steuerventil 12 auf Grund des Druckes in der Leitung 17 und im Arbeitsraum 18 seines Betätigungskolbens 19 wiederum schließt. Der Druck der Wassersäule zwischen den Steuerventilen 12 und 13 steht dann wieder im Gleichgewichtszustand zur Kraft der Feder 24 und die Stellung des Regelventils 9 bleibt in der neuen Drosselstellung stabil, bei welcher die Sprühdüse wiederum unter Nennbedingungen betrieben wird.

Zum Abschalten der Einrichtung wird das Magnetventil 2 geschlossen, so daß der Haupthahn 5 gleichfalls geschlossen wird. Auf Grund des dadurch sich ergebenden Druckabfalles nach dem Haupthahn 5 wird das Steuerventil 12 wieder durch die Kraft der Feder 25 geöffnet. In analoger Weise schließt das Regelventil 2 durch die Kraft der Feder 24. Das Steuerventil 13 bleibt geschlossen. Auf diese Weise werden die Ausgangszustände für die neuerliche Inbetriebnahme erreicht und bei einem Einschalten des Verbrauchers treten die oben beschriebenen Regelvorgänge auf.

Patentansprüche:

1. Einrichtung zum Regeln des Druckes in einer Fluidikleitung (1), insbesondere zur Regelung von niederen Flüssigkeitsdrücken bis max. 5 bar, dadurch gekennzeichnet, daß in die Fluidikleitung (1) ein Regelventil (9) eingeschaltet ist, dessen Betätigungsorgan (15) vom Fluidikleitungsdruck vor dem Regelventil (9) über eine Zweigleitung (11) im Sinne des Öffnens des Regelventils (9) beaufschlagbar ist, und daß wenigstens ein Steuerventil (12) in die Zweigleitung (11) zum Betätigungsorgan (15) des Regelventils (9) eingeschaltet ist, dessen Betätigungsorgan (19) vom Druck in der Fluidikleitung nach dem Regelventil (9) im Schließsinne beaufschlagt ist.

2. Einrichtung nach Anspruch 1, dadurch gekennzeichnet, daß in die Fluidikleitung (1) zwischen Regelventil (9) und Verbraucher (6) eine Drossel (20) eingeschaltet ist und daß an die Fluidikleitung (1) zwischen dem Regelventil (9) und der Drossel (20) eine Zweigleitung (17) angeschlossen ist, welche mit dem Betätigungsorgan (19) des Steuerventils (12) in der Zweigleitung (11) zum Betätigungsorgan (15) des Regelventils (9) verbunden ist.

3. Einrichtung nach Anspruch 1 oder 2, dadurch gekennzeichnet, daß die Zweigleitung (11) für das Betätigungsorgan (15) des Regelventils (9) nach dem Betätigungsorgan (15) des Regelventils (9) über ein weiteres Steuerventil (13) mit dem Rücklauf bzw. Tank (16) verbunden ist, dessen Betätigungsorgan (23) vom Druck in der Fluidikleitung (1) nach der Drossel (20) im Öffnungssinne beaufschlagt ist.

4. Einrichtung nach Anspruch 3, dadurch gekennzeichnet, daß das Betätigungsorgan (23) des weiteren Steuerventils (13) in der Zweigleitung (11) einen Leerweg (a) aufweist, über welchen es vom Druck in der Fluidikleitung (1) nach der Drossel (20) bewegbar ist, und daß das Öffnen des weiteren

Steuerventils (13) erst anschließend an den Leerweg (a) des Betätigungsorganes (23) einsetzt.

5. Einrichtung nach einem der Ansprüche 1 bis 4, dadurch gekennzeichnet, daß die Betätigungsorgane der Ventile (9;12; 13) von federbelasteten Kolben (24,15;25,19;26,23) gebildet sind, deren Arbeitsräume (14;18;22) vom Druck in den angeschlossenen Leitungen (11;17;21) beaufschlagt sind.

6. Einrichtung nach Anspruch 5, dadurch gekennzeichnet, daß der Betätigungskolben (15) des Regelventils (9) durch eine Feder (24) im Schließsinne des Regelventils (9) beaufschlagt ist.

7. Einrichtung nach Anspruch 5 oder 6, dadurch gekennzeichnet, daß der Betätigungskolben (19) des Steuerventils (12) in der Zweigleitung (11) zum Arbeitsraum (14) des Betätigungskolbens (15) des Regelventils (9) durch eine Feder (25) im Öffnungssinne des Steuerventils (12) beaufschlagt ist.

8. Einrichtung nach Anspruch 5, 6 oder 7, dadurch gekennzeichnet, daß der Betätigungskolben (23) des weiteren Steuerventils (13) zum Rücklauf oder Tank (16) durch eine Feder (26) im Schließsinne des weiteren Steuerventils (13) beaufschlagt ist und daß der Betätigungskolben (23) erst nach einem ersten Teilbereich (a) seines Hubes im Öffnungssinne des weiteren Steuerventils mit dem weiteren Steuerventil (13) zusammenwirkt.

9. Einrichtung nach einem der Ansprüche 1 bis 8, dadurch gekennzeichnet, daß die Steuerventile (12,13) mit einem Anschlag ausgestattet sind, welcher vor Erreichen der vollen Offenstellung der Steuerventile mit den Betätigungsorganen (19,23) derselben zusammenwirkt.

10. Einrichtung nach einem der Ansprüche 1 bis 9, dadurch gekennzeichnet, daß in die Fluidikleitung (1) vor dem Pegelventil (9) und vor der Abzweigung der Zweigleitung (11) für das Betätigungsorgan (15) des Regelventils (9) eine einstellbare Drossel (8) eingeschaltet ist.

**Europäisches Patentamt**

## EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,A | US-A-2 787 285 (P. SPENCE) <br><br> * Ganzes Dokument * | 1-3,5-8 | G 05 D 16/16 <br> F 15 B 21/00 |
| X | US-A-3 495 619 (T. IIZUMI) <br> * Ansprüche 1, 6, 9; Figuren 2-4 * | 1,5-7 | |
| A | FR-A- 830 420 (S.A. DES REGULATEURS UNIVERSELS ARCA) <br> * Seite 1, Zeile 1 - Seite 2, Zeile 64; Figur 1 * | 1,5-7 | |
| A | DE-A-1 523 291 (H. BÄLZ) <br> * Anspruch 1; Figur * | 1 | |
| A | DE-B-1 296 854 (GROVE VALVE & REGULATOR CO.) | | **RECHERCHIERTE SACHGEBIETE (Int. Cl. ³)** |
| A | GB-A-1 494 735 (BRITISH GAS CORP.) <br><br> ----- | | G 05 D 16/00 <br> F 15 B 21/00 |

Der vorliegende Recherchenbericht wurde für alle Patentansprüche erstellt.

| Recherchenort | Abschlußdatum der Recherche | Prüfer |
|---|---|---|
| BERLIN | 04-03-1983 | LEMBLE Y.A.F.M. |